# EUROPEAN PATENT APPLICATION

(11) **EP 4 742 334 A1**
(43) Date of publication of application: **13.05.2026**
(21) Application number: 25211273.5
(22) Date of filing: 27.10.2025
(51) Int. Cl.: H01M 8/04, H01M 8/04014, H01M 8/2475

(54) **FUEL CELL SYSTEM**

(30) Priority: 08.11.2024 JP 2024196200; 25.03.2025 JP 2025049950
(71) Applicant: AISIN CORPORATION, Aichi 448-8650 (JP)
(72) Inventor: WATANABE, Hidetaka, KARIYA, AICHI, 448-8650 (JP); FUJIRAI, Masayuki, KARIYA, AICHI, 448-8650 (JP); FUNAYAMA, Honami, KARIYA, AICHI, 448-8650 (JP)
(74) Representative: Cabinet Beau de Loménie

(57) **Abstract**

A first fuel cell system (10) includes a fuel cell (21) that generates electric power with a reaction between fuel gas supplied to a fuel electrode and oxidant gas supplied to an oxidant electrode, a combustor (22) that combusts combustible gas, a plurality of heat exchangers, each of which includes a low-temperature gas channel through which low-temperature gas flows, the low temperature gas being fuel gas supplied to the fuel cell (21) or oxidant gas, and a high-temperature gas channel through which high-temperature gas flows, the high-temperature gas being off-gas discharged from the fuel cell (21) or combustion exhaust gas discharged from the combustor (22), and exchanges heat between low-temperature gas flowing through the low-temperature gas channel and high-temperature gas flowing through the high-temperature gas channel, and a case (39) having a thermal insulation property and housing the fuel cell (21), the combustor (22), and the plurality of heat exchangers, in which the fuel cell (21) and the combustor (22) are disposed in a central portion in an internal space of the case (39), and one or more heat exchangers of the plurality of heat exchangers are disposed so as to cover at least a portion of the fuel cell (21) and the combustor (22) from outside.

## Description

### TECHNICAL FIELD

The present disclosure discloses a fuel cell system.

### BACKGROUND DISCUSSION

Conventionally, there is provided a fuel cell device including a fuel cell that generates electric power utilizing air for power generation and reformed gas, a combustor that combusts both off-gas of the reformed gas and off-gas of the air for power generation discharged from the fuel cell, a first air heat exchanger that has a combustion exhaust gas path through which combustion exhaust gas generated in the combustor flows and a first air supply path through which the air for power generation flows, and that heats the air for power generation by heat exchange between the combustion exhaust gas and the air for power generation, a fuel cell storage which stores the fuel cell, and through which the off-gas of the air for power generation discharged from the fuel cell flows, a second air heat exchanger that has a second air supply path which supplies the air for power generation, which has flowed through the first air supply path, to the fuel cell, and that heats the air for power generation by heat exchange between the off-gas of the air for power generation which flows in the fuel cell storage and the air for power generation which flows through the second air supply path, and a housing that stores members, in which the first air supply path and the second air supply path are disposed to cover whole members stored in the housing (refer to Japanese Unexamined Patent Application Publication No. 2017-199658, for example). It is described that, according to the fuel cell device, it is possible to reduce an amount of heat radiation to outside and facilitate temperature control of the air for power generation and component units included in the fuel cell device.

In the fuel cell system described above, the air supply paths (the first air supply path and the second air supply path) cover the whole members stored in the housing, which is, however, insufficient to reduce the heat radiation to outside of the housing, and thus may cause low power generation efficiency.

A need thus exists for a fuel cell system which is not susceptible to the drawback mentioned above.

A main object of the present disclosure is to sufficiently reduce heat dissipation to outside of a case to further improve power generation efficiency.

### SUMMARY

The present disclosure has adopted the following aspects to achieve the main object described above.

That is, a gist of a first fuel cell system of the present disclosure is that the first fuel cell system includes a fuel cell that generates electric power with a reaction between fuel gas supplied to a fuel electrode and oxidant gas supplied to an oxidant electrode, a combustor that combusts combustible gas, a plurality of heat exchangers, each of which includes a low-temperature gas channel through which low-temperature gas flows, the low temperature gas being fuel gas supplied to the fuel cell or oxidant gas, and a high-temperature gas channel through which high-temperature gas flows, the high-temperature gas being off-gas discharged from the fuel cell or combustion exhaust gas discharged from the combustor, and exchanges heat between low-temperature gas flowing through the low-temperature gas channel and high-temperature gas flowing through the high-temperature gas channel, and a case having a thermal insulation property and housing the fuel cell, the combustor, and the plurality of heat exchangers, in which the fuel cell and the combustor are disposed in a central portion in an internal space of the case, and one or more heat exchangers of the plurality of heat exchangers are disposed so as to cover at least a portion of the fuel cell and the combustor from outside.

In the first fuel cell system of the present disclosure, the fuel cell and the combustor are disposed in the central portion in the internal space of the case, and one or more heat exchangers of the plurality of heat exchangers are disposed so as to cover at least a portion of the fuel cell and the combustor from the outside. As a result, it is possible to transfer heat of the fuel cell and the combustor, which are high-temperature members disposed in the central portion, to members (one or more of the heat exchangers) disposed outside, and reduce heat dissipation from the high-temperature members. As a result, the heat dissipation to the outside of the case can be sufficiently reduced, and the power generation efficiency can be further improved.

A gist of a second fuel cell system of the present disclosure is that the second fuel cell system includes a fuel cell that generates electric power with a reaction between fuel gas supplied to a fuel electrode and oxidant gas supplied to an oxidant electrode, a combustor that combusts combustible gas, a plurality of heat exchangers, each of which includes, in different combinations, a low-temperature gas channel through which low-temperature gas flows, the low temperature gas being fuel gas supplied to the fuel cell or oxidant gas, and a high-temperature gas channel through which high-temperature gas flows, the high-temperature gas being off-gas discharged from the fuel cell or combustion exhaust gas discharged from the combustor, and exchanges heat between low-temperature gas flowing through the low-temperature gas channel and high-temperature gas flowing through the high-temperature gas channel, and a case having a thermal insulation property and housing the fuel cell, the combustor, and the plurality of heat exchangers, in which at least the fuel cell, the combustor, and the plurality of heat exchangers are arranged in layers such that a first layer, a second layer, and a third layer of temperature zones are formed in order from a central portion toward outside of an internal space of the case, the fuel cell and the combustor are disposed in the first layer, one or more heat exchangers of the plurality of heat exchangers are disposed in the second layer, and one or more another heat exchangers of the plurality of heat exchangers are disposed in the third layer.

In the second fuel cell system of the present disclosure, at least the fuel cell, the combustor, and the plurality of heat exchangers are arranged in layers such that the first layer, the second layer, and the third layer of the temperature zones are formed in order from the central portion of an inside of the case toward outside, the fuel cell and the combustor are disposed in the first layer, one or more heat exchangers of the plurality of heat exchangers are disposed in the second layer, and one or more another heat exchangers of the plurality of heat exchangers are disposed in the third layer. As a result, it is possible to transfer heat of the fuel cell and the combustor, which are high-temperature members disposed in the central portion, to members (the plurality of heat exchangers) disposed outside, and reduce heat dissipation from the high-temperature members. As a result, the heat dissipation to the outside of the case can be sufficiently reduced, and the power generation efficiency can be further improved.

A gist of a third fuel cell system of the present disclosure is that the third fuel cell system includes a fuel cell that generates electric power with a reaction between fuel gas supplied to a fuel electrode and oxidant gas supplied to an oxidant electrode, a combustor that combusts combustible gas, a plurality of heat exchangers, each of which includes, in different combinations, a low-temperature gas channel through which low-temperature gas flows, the low temperature gas being fuel gas supplied to the fuel cell or oxidant gas, and a high-temperature gas channel through which high-temperature gas flows, the high-temperature gas being off-gas discharged from the fuel cell or combustion exhaust gas discharged from the combustor, and exchanges heat between low-temperature gas flowing through the low-temperature gas channel and high-temperature gas flowing through the high-temperature gas channel, and a case having a thermal insulation property and housing the fuel cell, the combustor, and the plurality of heat exchangers, in which, in a case where the fuel cell and the combustor are disposed in an internal space of the case, the fuel cell serves as a first layer, and a space between an outer side surface of the fuel cell and an inner side surface of the case is divided into a second layer and a third layer in order from a central portion toward outside of the case, one or more heat exchangers of the plurality of heat exchangers are disposed in the second layer, and one or more another heat exchangers of the plurality of heat exchangers are disposed in the third layer.

In the third fuel cell system of the present disclosure, in a case where the fuel cell disposed in the internal space of the case serves as the first layer, and the space between the outer side surface of the fuel cell and the inner side surface of the case is divided into the second layer and the third layer in order from the central portion toward outside of the case, one or more heat exchangers of the plurality of heat exchangers are disposed in the second layer, and one or more another heat exchangers of the plurality of heat exchangers are disposed in the third layer. As a result, it is possible to transfer heat of the fuel cell, which is a high-temperature member, to members (the plurality of heat exchangers) disposed outside, and reduce heat dissipation from the high-temperature member. As a result, the heat dissipation to the outside of the case can be sufficiently reduced, and the power generation efficiency can be further improved.

A gist of a fourth fuel cell system of the present disclosure is that the fourth fuel cell system includes a fuel cell that generates electric power with a reaction between fuel gas supplied to a fuel electrode and oxidant gas supplied to an oxidant electrode, a combustor that combusts combustible gas, a plurality of heat exchangers, each of which includes, in different combinations, a low-temperature gas channel through which low-temperature gas flows, the low temperature gas being fuel gas supplied to the fuel cell or oxidant gas, and a high-temperature gas channel through which high-temperature gas flows, the high-temperature gas being off-gas discharged from the fuel cell or combustion exhaust gas discharged from the combustor, and exchanges heat between low-temperature gas flowing through the low-temperature gas channel and high-temperature gas flowing through the high-temperature gas channel, and a case having a thermal insulation property and housing the fuel cell, the combustor, and the plurality of heat exchangers, in which the fuel cell and the combustor are disposed in a central portion in an internal space of the case, one or more heat exchangers of the plurality of heat exchangers are disposed so as to cover at least a portion of the fuel cell and the combustor from outside, and one or more another heat exchangers of the plurality of heat exchangers are disposed so as to cover at least a portion of the one or more of heat exchangers from outside.

In the fourth fuel cell system of the present disclosure, the fuel cell and the combustor are disposed in the central portion in the internal space of the case, one or more heat exchangers of the plurality of heat exchangers are disposed so as to cover at least a portion of the fuel cell and the combustor from the outside, and one or more another heat exchangers of the plurality of heat exchangers are disposed so as to cover at least a portion of the one or more of heat exchangers from outside. As a result, it is possible to transfer heat of the fuel cell and the combustor, which are high-temperature members disposed in the central portion, to members (the plurality of heat exchangers) disposed outside, and reduce heat dissipation from the high-temperature members. As a result, the heat dissipation to the outside of the case can be sufficiently reduced, and the power generation efficiency can be further improved.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic configuration diagram of a fuel cell system 10 according to the present embodiment;
Fig. 2 is a schematic configuration diagram of a power generation module 20;
Fig. 3 is an explanatory diagram for explaining temperature zones for each layer of the power generation module 20;
Fig. 4 is a perspective view of an inside of the power generation module 20;
Fig. 5 is a perspective view of an inside of the power generation module 20;
Fig. 6 is an explanatory diagram showing another example of disposition of a combustor 22;
Fig. 7 is a schematic configuration diagram of a power generation module 120 according to another embodiment; and
Fig. 8 is a schematic configuration diagram of a power generation module 220 according to another embodiment;

### DETAILED DESCRIPTION

Next, embodiments for implementing the present disclosure will be described with reference to the drawings.

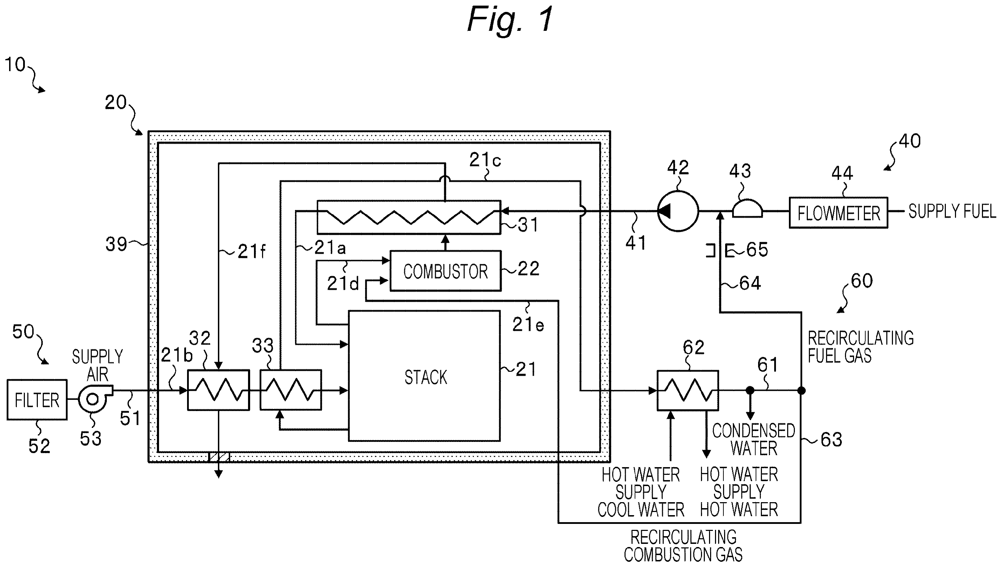

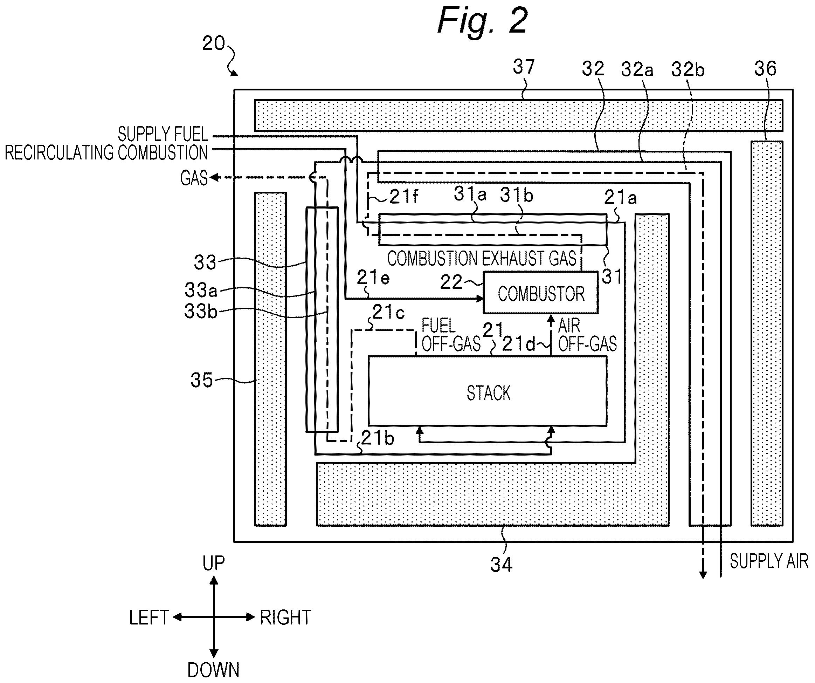

Fig. 1 is a schematic configuration diagram of a fuel cell system 10 according to the present embodiment, and Fig. 2 is a schematic configuration diagram of a power generation module 20. As illustrated in Fig. 1, the fuel cell system 10 according to the present embodiment includes the power generation module 20 including a fuel cell stack 21, a fuel supply system 40 that supplies fuel gas to the power generation module 20, an air supply system 50 that supplies air to the power generation module 20, and a recirculation system 60.

As illustrated in Figs. 1 and 2, the power generation module 20 includes a combustor 22, and first, second, and third heat exchangers 31, 32, and 33 in addition to the fuel cell stack 21, and these are housed in a module case 39 having a box shape and a thermal insulation property.

The fuel cell stack 21 includes a plurality of solid oxide single cells 11 each including a solid electrolyte, a fuel electrode (anode) disposed on one surface side of the solid electrolyte, and an oxidant electrode (cathode) disposed on another surface side of the solid electrolyte. Because the fuel cell stack 21 operates in a high-temperature environment of about 600°C to 800°C, the solid electrolyte, the fuel electrode, and the oxidant electrode are fabricated from a ceramic material. For the fuel electrode, cermet made of ceramics and metal, such as catalytic nickel, is used. The fuel cell stack 21 generates electric power with a reaction between hydrogen contained in the fuel gas supplied to the fuel electrode and oxygen contained in oxidant gas (air) supplied to the oxidant electrode. Then, the fuel cell stack 21 discharges fuel off-gas containing unreacted fuel gas and water vapor from the fuel electrode, and discharges air off-gas containing unreacted oxygen from the oxidant electrode. A temperature sensor (not shown) is disposed near the fuel cell stack 21. The temperature sensor detects a temperature (stack temperature) correlated with the temperature of fuel cell stack 21.

As shown in Fig. 1, one end of a fuel electrode inlet pipe 21a is connected to a fuel electrode inlet of the fuel cell stack 21, and the fuel supply system 40 is connected to another end of the fuel electrode inlet pipe 21a. One end of an oxidant electrode inlet pipe 21b is connected to an oxidant electrode inlet of the fuel cell stack 21, and the air supply system 50 is connected to another end of the oxidant electrode inlet pipe 21b. One end of a fuel electrode outlet pipe 21c is connected to a fuel electrode outlet of the fuel cell stack 21, and the recirculation system 60 is connected to another end of the fuel electrode outlet pipe 21c. One end of an oxidant electrode outlet pipe 21d is connected to an oxidant electrode outlet of the fuel cell stack 21, and the combustor 22 is connected to another end of the oxidant electrode outlet pipe 21d. In addition to the oxidant electrode outlet pipe 21d, a combustion gas pipe 21e and a combustion exhaust gas pipe 21f are connected to the combustor 22.

The combustor 22 introduces the fuel off-gas (recirculating combustion gas) through the combustion gas pipe 21e and introduces the air off-gas through the oxidant electrode outlet pipe 21d to combust a mixed gas thereof. The combustor 22 is provided with an igniter for igniting the mixed gas and the temperature sensor for detecting a temperature inside the combustor 22.

The first and third heat exchangers 31 and 33 are heat exchangers each having a flat plate shape and a meandering channel formed therein. The second heat exchanger 32 is a heat exchanger having a flat plate shape and a meandering channel formed therein, and bent in a substantially L shape in a front view. As shown in Fig. 2, the first heat exchanger 31 includes a fuel gas channel 31a interposed in the fuel electrode inlet pipe 21a and a combustion exhaust gas channel 31b interposed in the combustion exhaust gas pipe 21f close to each other, and exchanges heat between the fuel gas (supply fuel) flowing through the fuel gas channel 31a and the combustion exhaust gas flowing through the combustion exhaust gas channel 31b. The second heat exchanger 32 includes an oxidant gas channel 32a interposed in the oxidant electrode inlet pipe 21b and a combustion exhaust gas channel 32b interposed in the combustion exhaust gas pipe 21f on downstream of the first heat exchanger 31 (combustion exhaust gas channel 31b) close to each other, and exchanges heat between air (supply air) flowing through the oxidant gas channel 32a and combustion exhaust gas passing through the first heat exchanger 31 and flowing through the combustion exhaust gas channel 32b. The third heat exchanger 33 includes an oxidant gas channel 33a interposed in the oxidant electrode inlet pipe 21b on downstream of the second heat exchanger 32 and a fuel off-gas channel 33b interposed in the fuel electrode outlet pipe 21c close to each other, and exchanges heat between supply air passing through the second heat exchanger 32 and flowing through the oxidant gas channel 33a and the fuel off-gas flowing through the fuel off-gas channel 33b.

As illustrated in Fig. 1, the fuel supply system 40 includes a fuel supply pipe 41 having one end connected to a fuel source and another end connected to the fuel electrode inlet pipe 21a, a fuel blower 42 disposed on the fuel supply pipe 41, a governor 43 disposed on upstream of the fuel blower 42 on the fuel supply pipe 41, and a flowmeter 44 that detects a flow rate of the fuel gas flowing through the fuel supply pipe 41. In the present embodiment, a hydrogen source such as a hydrogen tank is used as the fuel source. By operating the fuel blower 42, the fuel gas (hydrogen gas) from the fuel source is supplied to the power generation module 20. The fuel gas supplied to power generation module 20 is heated by heat exchange with the combustion exhaust gas in the first heat exchanger 31, and then supplied to the fuel electrode of the fuel cell stack 21. As the fuel source, an ammonia source such as an ammonia tank may be used. Ammonia supplied to the power generation module 20 by operation of the fuel blower 42 is decomposed into hydrogen and nitrogen by action of a fuel electrode catalyst, and the decomposed hydrogen is used for power generation of the fuel cell stack 21.

As shown in Fig. 1, the air supply system 50 includes an air supply pipe 51 having one end connected to a filter 52 and another end connected to the oxidant electrode inlet pipe 21b, and an air blower 53 disposed in the air supply pipe 51. By driving the air blower 53, air sucked into the air supply pipe 51 through the filter 52 is introduced into the oxidant electrode inlet pipe 21b, heated to a necessary temperature by heat exchange with the combustion exhaust gas in the second heat exchanger 32 or heat exchange with fuel electrode off-gas in the third heat exchanger 33, and then supplied to the oxidant electrode of the fuel cell stack 21.

As shown in Fig. 1, the recirculation system 60 includes a fuel off-gas pipe 61 connected to another end of a hydrogen electrode outlet pipe 21c having one end connected to the fuel cell stack 21, a condenser 62 disposed on the fuel off-gas pipe 61, and a recirculating combustion gas pipe 63 and a recirculating fuel gas pipe 64 branching on downstream of the condenser 62 in the fuel off-gas pipe 61. The condenser 62 cools the fuel off-gas by heat exchange with hot water supply cool water to condense water vapor contained in the fuel off-gas. Condensed water generated by condensation of the water vapor in the fuel off-gas in the condenser 62 is discharged through a condensed water pipe.

One end of the recirculating combustion gas pipe 63 is connected to a branch point of the fuel off-gas pipe 61, and another end of the recirculating combustion gas pipe 63 is connected to the combustor 22 via the combustion gas pipe 21e. One end of the recirculating fuel gas pipe 64 is connected to the branch point of the fuel off-gas pipe 61, and another end of the recirculating fuel gas pipe 64 is connected between the fuel blower 42 and the governor 43 in the fuel supply pipe 41. As a result, the fuel off-gas that has passed through the condenser 62 is distributed to the recirculating combustion gas pipe 63 and the recirculating fuel gas pipe 64. The fuel off-gas distributed to the recirculating combustion gas pipe 63 is supplied to the combustor 22 as the recirculating combustion gas. The fuel off-gas distributed to the recirculating fuel gas pipe 64 is recirculated to the fuel supply pipe 41 and supplied to the fuel electrode of the fuel cell stack 21 as recirculating fuel gas. The recirculating fuel gas pipe 64 is provided with an orifice 65 for adjusting a distribution ratio of the fuel off-gas.

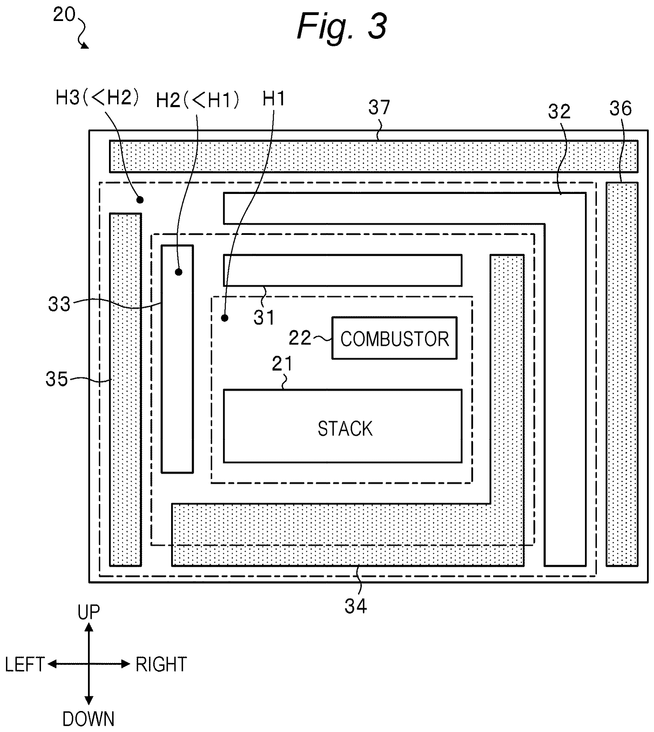

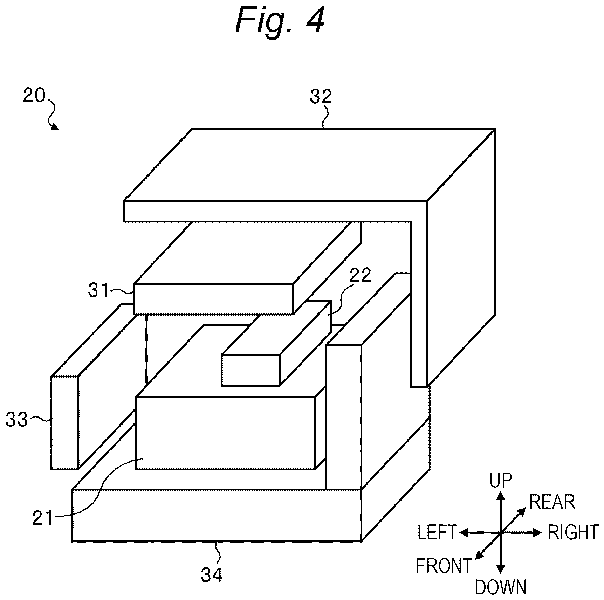

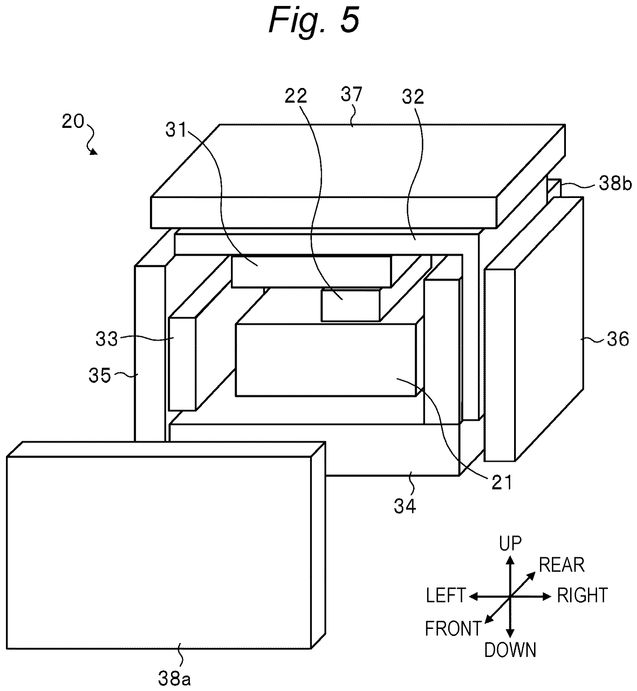

In the fuel cell system 10 configured as described above, as shown in Figs. 3, 4, and 5, the fuel cell stack 21 and the combustor 22 are disposed close to each other in a central portion of an internal space of the module case 39. The first heat exchanger 31 is disposed substantially horizontally so as to cover the fuel cell stack 21 and the combustor 22 from above in the drawing. The third heat exchanger 33 is disposed substantially vertically along a side surface (left side surface) of the fuel cell stack 21 so as to cover the fuel cell stack 21 and the combustor 22 from a side (left side) in the drawing. A heat insulation material 34 is disposed from a side (right side) opposite to the third heat exchanger 33 to a bottom, so as to surround, together with the first heat exchanger 31 and the third heat exchanger 33, the fuel cell stack 21 and the combustor 22 in a circumferential direction. The second heat exchanger 32 is disposed along a side surface (right side surface) of the heat insulation material 34 and an upper surface of the first heat exchanger 31, so as to cover a side of the heat insulation material 34 and an upper side of the first heat exchanger 31. A heat insulation material 35 having a flat plate shape is disposed on a side (left side) opposite to the second heat exchanger 32, so as to surround, together with the second heat exchanger 32, the first heat exchanger 31, the third heat exchanger 33, and a side portion of the heat insulation material 34 in the circumferential direction. As shown in Fig. 5, a heat insulation material 36 having a flat plate shape is disposed along a side surface (right side surface) of the second heat exchanger 32 so as to cover a side portion of the second heat exchanger 32, a heat insulation material 37 having a flat plate shape is disposed along an upper surface of the second heat exchanger 32 so as to cover an upper side portion of the second heat exchanger 32, and heat insulation materials 38a and 38b each having a flat plate shape are disposed so as to close a front and a rear (back). As a result, in the internal space defined by the module case 39, a layer (first layer) of a high-temperature zone H1 (600°C or higher, for example), a layer (second layer) of a middle-temperature zone H2 (400°C or higher and lower than 600°C, for example) lower in temperature than the high-temperature zone H1, and a layer (third layer) of a low-temperature zone H3 (150°C or higher and lower than 400°C, for example) lower in temperature than the middle-temperature zone H2 are formed in order from the central portion toward outside. Arrangement of the first, second, and third heat exchangers 31, 32, and 33 and the heat insulation materials 34, 35, 36, and 37 is not limited thereto, and it is only required that the heat exchangers and the heat insulation materials are arranged in layers so as to cover at least a portion of the fuel cell stack 21 and combustor 22.

As described above, by forming the three temperature zones in the internal space of the module case 39 with the fuel cell stack 21, the combustor 22, the first heat exchanger 31, the second heat exchanger 32, the third heat exchanger 33, and the heat insulation materials 34, 35, 36, 37, 38a, and 38b, it is possible to transfer heat of the fuel cell stack 21 and the combustor 22, which are high-temperature members disposed in the central portion in the internal space of the module case 39, to members (first, second, and third heat exchangers 31, 32, and 33) disposed outside the fuel cell stack 21 and the combustor 22, and reduce heat dissipation from the high-temperature members. As a result, the heat dissipation to the outside of the module case 39 can be sufficiently reduced, and the power generation efficiency can be further improved. In particular, because the first heat exchanger 31 and the second heat exchanger 32 are disposed above the fuel cell stack 21 and combustor 22 so as to overlap each other vertically, heat directed upward from the fuel cell stack 21 and the combustor 22 can be efficiently transferred to the first heat exchanger 31 and the second heat exchanger 32. Therefore, temperature of the supply fuel and supply air to the fuel cell stack 21 can be efficiently raised, and the power generation efficiency can be further improved.

In addition, because the fuel off-gas from the fuel electrode of the fuel cell stack 21 is supplied to the condenser 62 disposed outside the power generation module 20 to condense the water vapor contained in the fuel off-gas, and then is supplied to the combustor 22 as the recirculating combustion gas, an inside of the power generation module 20 can be maintained at a temperature suitable for the operation with a small amount of fuel. At this time, the fuel off-gas exchanges heat with the supply air in the third heat exchanger 33 and then is discharged to outside of the power generation module 20. Therefore, an amount of heat dissipation to outside of the power generation module 20 can be further reduced. As a result, the power generation efficiency can be further improved.

Note that the present disclosure is not limited to the above-described embodiment at all, and it goes without saying that the present disclosure may be implemented in various modes as long as it falls within the technical scope of the present disclosure.

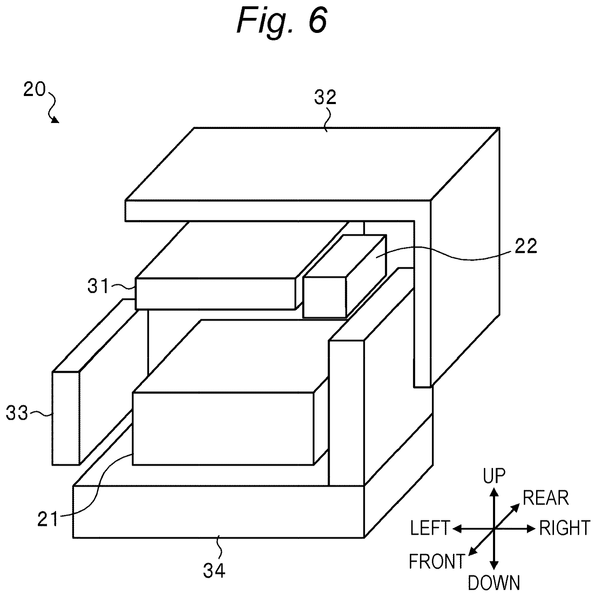

For example, in the embodiment described above, the combustor 22 is disposed in the first layer between the fuel cell stack 21 and the first heat exchanger 31. However, as shown in Fig. 6, the combustor 22 may be disposed in the same layer (second layer) as the first heat exchanger 31 and the third heat exchanger 33, for example, disposed side by side with the first heat exchanger 31. Accordingly, the power generation module 20 can be made more compact by effectively utilizing dead space.

In the embodiment described above, the power generation module 20 includes the first, second, and third heat exchangers 31, 32, and 33 as heat exchangers. However, the number of heat exchangers may be two or four or more as long as a plurality of heat exchangers is disposed such that a plurality of temperature zones is formed in the internal space of the module case 39 from the central portion toward the outside. For example, the power generation module 20 may include a fourth heat exchanger that includes, on downstream of the third heat exchanger 33, a fuel off-gas channel interposed in the fuel electrode outlet pipe 21c and a combustion gas channel interposed in the combustion gas pipe 21e close to each other, and exchanges heat between the fuel off-gas flowing through the fuel off-gas channel and the recirculating combustion gas flowing through the combustion gas channel.

In the above-described embodiment, the third heat exchanger 33 exchanges heat between the supply air and the fuel off-gas, but may exchange heat between the supply air and the air off-gas.

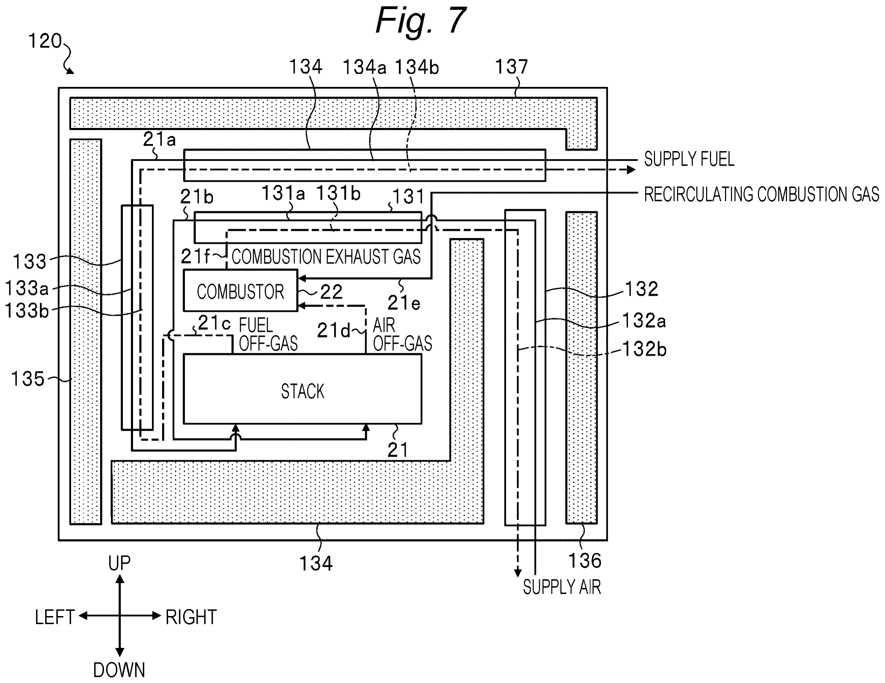

Fig. 7 is a schematic configuration diagram of a power generation module 120 according to another embodiment. The power generation module 120 according to the another embodiment includes first, second, third, and fourth heat exchangers 131, 132, 133, and 134 in addition to a fuel cell stack 21 and a combustor 22 that are similar to those in the power generation module 20 according to the present embodiment. The first, second, third, and fourth heat exchangers 131, 132, 133, and 134 are heat exchangers each having a flat plate shape and a meandering channel formed therein. The first heat exchanger 131 includes an oxidant gas channel 131a interposed in an oxidant electrode inlet pipe 21b and a combustion exhaust gas channel 131b interposed in a combustion exhaust gas pipe 21f close to each other, and exchanges heat between air (supply air) flowing through the oxidant gas channel 131a and combustion exhaust gas flowing through the combustion exhaust gas channel 131b. The second heat exchanger 132 includes an oxidant gas channel 132a interposed in the oxidant electrode inlet pipe 21b on upstream of the first heat exchanger 131 (oxidant gas channel 131a), and a combustion exhaust gas channel 132b interposed in the combustion exhaust gas pipe 21f on downstream of the first heat exchanger 131 (combustion exhaust gas channel 131b) close to each other, and exchanges heat between the supply air flowing through the oxidant gas channel 132a and the combustion exhaust gas passing through the first heat exchanger 131 and flowing through the combustion exhaust gas channel 132b. The supply air that has passed through the second heat exchanger 132 flows through the oxidant gas channel 131a of the first heat exchanger 131, exchanges heat with the combustion exhaust gas flowing through the combustion exhaust gas channel 131b, and then is supplied to an oxidant electrode of the fuel cell stack 21.

The third heat exchanger 133 includes a fuel gas channel 133a interposed in a fuel electrode inlet pipe 21a and a fuel off-gas channel 133b interposed in a fuel electrode outlet pipe 21c close to each other, and exchanges heat between fuel gas (supply fuel) flowing through the fuel gas channel 133a and fuel off-gas flowing through the fuel off-gas channel 133b. The fourth heat exchanger 134 includes a fuel gas channel 134a interposed in the fuel electrode inlet pipe 21a on upstream of the third heat exchanger 133 (fuel gas channel 133a), and a fuel off-gas channel 134b interposed in the fuel electrode outlet pipe 21c on downstream of the third heat exchanger 133 (fuel off-gas channel 133b) close to each other, and exchanges heat between the supply fuel flowing through the fuel gas channel 134a and the fuel off-gas passing through the third heat exchanger 133 and flowing through the fuel off-gas channel 134b. The supply fuel that has passed through the fourth heat exchanger 134 flows through the fuel gas channel 133a of the third heat exchanger 133, exchanges heat with the fuel off-gas flowing through the fuel off-gas channel 133b, and then is supplied to a fuel electrode of the fuel cell stack 21.

In the power generation module 120 configured as described above according to the another embodiment, as shown in Fig. 7, the first heat exchanger 131 is disposed substantially horizontally so as to cover the fuel cell stack 21 and the combustor 22 from above in the drawing, and the third heat exchanger 133 is disposed substantially vertically along a side surface (left side surface) of the fuel cell stack 21 so as to cover the fuel cell stack 21 and the combustor 22 from a side (left side) in the drawing. A heat insulation material 34 is disposed from a side (right side) opposite to the third heat exchanger 133 to a bottom, so as to surround, together with the first heat exchanger 131 and the third heat exchanger 133, the fuel cell stack 21 and the combustor 22 in a circumferential direction. The second heat exchanger 132 is disposed substantially vertically along a side surface (right side surface) of the heat insulation material 34 so as to cover a side portion of the heat insulation material 34. The fourth heat exchanger 134 is disposed substantially horizontally along an upper surface of the first heat exchanger 131 so as to cover an upper side portion of the first heat exchanger 131. A heat insulation material 35 having a flat plate shape is disposed on a side of the third heat exchanger 133 and along a side surface (left side surface) of the third heat exchanger 133, so as to surround, together with the second heat exchanger 132 and the fourth heat exchanger 134, the first heat exchanger 131, the third heat exchanger 133, and a side portion of the heat insulation material 34. A heat insulation material 36 having a flat plate shape is disposed along a side surface (right side surface) of the second heat exchanger 132 so as to cover a side portion of the second heat exchanger 132, a heat insulation material 37 having a flat plate shape is disposed along an upper surface of the fourth heat exchanger 134 so as to cover an upper side portion of the fourth heat exchanger 134, and a heat insulation material having a flat plate shape (not shown) is disposed so as to close a front and a rear (back).

As described above, by the first heat exchanger 131, the second heat exchanger 132, the third heat exchanger 133, the fourth heat exchanger 134, and the heat insulation materials 34, 35, 36, and 37 doubly surround the fuel cell stack 21 and the combustor 22 in the circumferential direction, it is possible to transfer heat of the fuel cell stack 21 and the combustor 22, which are high-temperature members disposed in the central portion in the internal space of the module case 39, to members (first, second, third, and fourth heat exchangers 131, 132, 133, and 134) disposed outside the fuel cell stack 21 and the combustor 22, and reduce heat dissipation from the high-temperature members. As a result, the heat dissipation to the outside of the module case 39 can be sufficiently reduced, and the power generation efficiency can be further improved. In particular, because the first heat exchanger 131 and the fourth heat exchanger 134 are disposed above the fuel cell stack 21 and combustor 22 so as to overlap each other vertically, heat directed upward from the fuel cell stack 21 and the combustor 22 can be efficiently transferred to the first heat exchanger 131 and the fourth heat exchanger 134. Therefore, temperature of the supply fuel and supply air to the fuel cell stack 21 can be efficiently raised, and the power generation efficiency can be further improved.

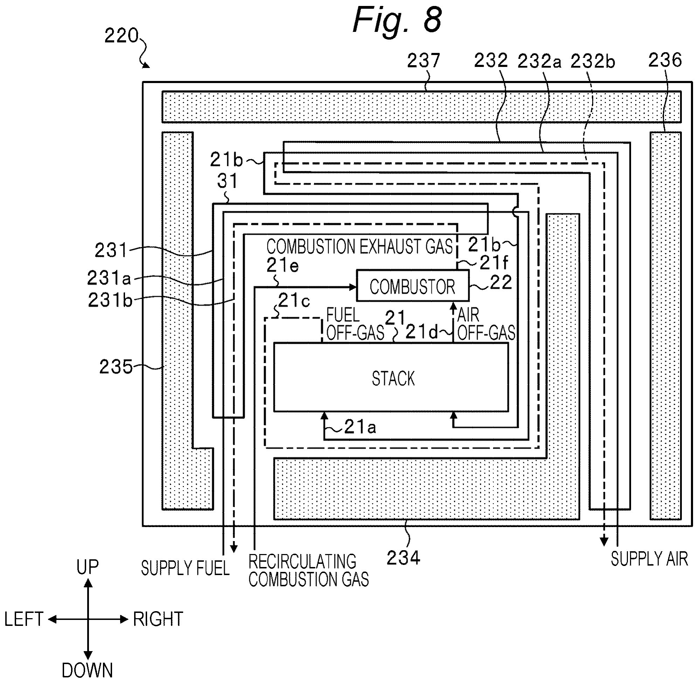

Fig. 8 is a schematic configuration diagram of a power generation module 220 according to another embodiment. The power generation module 220 according to the another embodiment includes first and second heat exchangers 231 and 232 in addition to a fuel cell stack 21 and a combustor 22 that are similar to those in the power generation module 20 according to the present embodiment. The first and second heat exchangers 231 and 232 are heat exchangers each having a flat plate shape and a meandering channel formed therein, and bent in a substantially L shape in a front view. The first heat exchanger 231 includes a fuel gas channel 231a interposed in a fuel electrode inlet pipe 21a and a combustion exhaust gas channel 231b interposed in a combustion exhaust gas pipe 21f close to each other, and exchanges heat between fuel gas (supply fuel) flowing through the fuel gas channel 231a and combustion exhaust gas flowing through the combustion exhaust gas channel 231b. The second heat exchanger 232 includes an oxidant gas channel 232a interposed in an oxidant electrode inlet pipe 21b and a fuel off-gas channel 232b interposed in a fuel electrode outlet pipe 21c close to each other, and exchanges heat between air (supply air) flowing through the oxidant gas channel 232a and fuel off-gas flowing through the fuel off-gas channel 232b.

In the power generation module 220 configured as described above according to the another embodiment, as shown in Fig. 8, the first heat exchanger 231 is disposed so as to cover the fuel cell stack 21 and the combustor 22 from a side (left side) to an upper side in the drawing. A heat insulation material 34 is disposed from a side portion (right side) opposite to the first heat exchanger 231 to a bottom, so as to surround, together with the first heat exchanger 231, the fuel cell stack 21 and the combustor 22 in a circumferential direction. The second heat exchanger 232 is disposed along a side surface (right side surface) of the heat insulation material 34 and an upper surface of the first heat exchanger 231, so as to cover a side portion (right side) of the heat insulation material 34 and an upper side portion of the first heat exchanger 231. A heat insulation material 35 having a flat plate shape is disposed on a side (left side) of the first heat exchanger 231, so as to surround, together with the second heat exchanger 232, the first heat exchanger 231 and a side (right side) of the heat insulation material 34 in the circumferential direction. A heat insulation material 36 having a flat plate shape is disposed so as to cover a side portion (right side) of the second heat exchanger 232, a heat insulation material 37 is disposed so as to cover an upper side portion of the second heat exchanger 232, and a heat insulation material having a flat plate shape (not shown) is disposed so as to close a front and a rear (back).

As described above, by the first heat exchanger 231, the second heat exchanger 232, and the heat insulation materials 34, 35, 36, and 37 doubly surround the fuel cell stack 21 and the combustor 22 in the circumferential direction, it is possible to transfer heat of the fuel cell stack 21 and the combustor 22, which are high-temperature members disposed in the central portion in the internal space of the module case 39, to members (first and second heat exchangers 231 and 232) disposed outside the fuel cell stack 21 and the combustor 22, and reduce heat dissipation from the high-temperature members. As a result, the heat dissipation to the outside of the module case 39 can be sufficiently reduced, and the power generation efficiency can be further improved. In particular, because the first heat exchanger 231 and the second heat exchanger 232 are disposed above the fuel cell stack 21 and combustor 22 so as to overlap each other vertically, heat directed upward from the fuel cell stack 21 and the combustor 22 can be efficiently transferred to the first heat exchanger 231 and the second heat exchanger 232. Therefore, temperature of the supply fuel and supply air to the fuel cell stack 21 can be efficiently raised, and the power generation efficiency can be further improved.

In the power generation modules 120 and 220 according to the another embodiments described above, the combustor 22 is disposed in a first layer between the fuel cell stack 21 and the first heat exchanger 131, 231. However, the combustor 22 may be disposed in the same layer (second layer) as the first heat exchanger 131, 231, or the like, for example, disposed side by side with the first heat exchanger 131, 231.

In the power generation module 20 according to the embodiment and the power generation modules 120 and 220 according to the another embodiments described above, the heat insulation material 34 is disposed at the bottom, and the heat exchangers (first heat exchanger 31, 131, 231, second heat exchanger 32, 132, 232, third heat exchanger 33, 133, and fourth heat exchanger 134) and the heat insulation materials 35,36, and 37 are disposed so as to doubly surround the fuel cell stack 21 and the combustor 22 from above and both sides. However, the power generation module may be configured to surround at least the fuel cell stack 21 over an entire circumference by one or more heat exchangers. The power generation module may be disposed such that at least the fuel cell stack 21 is surrounded by one or more heat exchangers from above and both sides.

The present disclosure is applicable to, for example, a manufacturing industry of a fuel cell system.

## Claims

1. A fuel cell system (10) comprising:
a fuel cell (21) configured to generate electric power with a reaction between fuel gas supplied to a fuel electrode and oxidant gas supplied to an oxidant electrode;
a combustor (22) for combusting combustible gas;
a plurality of heat exchangers, each of which includes a low-temperature gas channel for flowing therethrough low-temperature gas, the low-temperature gas being fuel gas supplied to the fuel cell (21) or oxidant gas, and a high-temperature gas channel for flowing therethrough high-temperature gas, the high-temperature gas being off-gas discharged from the fuel cell (21) or combustion exhaust gas discharged from the combustor (22), and is configured to exchange heat between low-temperature gas flowing through the low-temperature gas channel and high-temperature gas flowing through the high-temperature gas channel; and
a case (39) having a thermal insulation property and housing the fuel cell (21), the combustor (22), and the plurality of heat exchangers, wherein
the fuel cell (21) and the combustor (22) are disposed in a central portion in an internal space of the case (39), and
one or more heat exchangers of the plurality of heat exchangers are disposed so as to cover at least a portion of the fuel cell (21) and the combustor (22) from outside.

2. The fuel cell system (10) according to Claim 1, wherein
the one or more heat exchangers are arranged on upper side and/or a side of the fuel cell (21).

3. The fuel cell system (10) according to any one of Claims 1 or 2, wherein
one or more other heat exchangers of the plurality of heat exchangers are disposed so as to further cover at least a portion of the one or more heat exchangers from outside.

4. The fuel cell system (10) according to Claim 3, wherein
the plurality of heat exchangers includes
a first heat exchanger (31) that includes a fuel gas channel (31a, 133a, 134a, 231a) for flowing therethrough the fuel gas as the low-temperature gas and a first combustion exhaust gas channel (31b, 131b, 231b) for flowing therethrough the combustion exhaust gas flows as the high-temperature gas, and configured to exchange heat between fuel gas flowing through the fuel gas channel (31a, 133a, 134a, 231a) and combustion exhaust gas flowing through the first combustion exhaust gas channel (31b, 131b, 231b),
a second heat exchanger (32) that includes a first oxidant gas channel (32a, 132a, 232a) for flowing therethrough the oxidant gas as the low-temperature gas and a second combustion exhaust gas channel (32b, 132b) for flow therethrough the combustion exhaust gas that has passed through the first heat exchanger (31) as the high-temperature gas, and is configured to exchange heat between oxidant gas flowing through the first oxidant gas channel (32a, 132a, 232a) and combustion exhaust gas flowing through the second combustion exhaust gas channel (32b, 132b), and
a third heat exchanger (33) that includes a second oxidant gas channel (33a) for flowing therethrough the oxidant gas that has passed through the second heat exchanger (32) as the low-temperature gas and an off-gas channel (33b, 133b, 134b, 232b) for flowing therethrough the fuel off-gas or oxidant off-gas as the high-temperature gas, and is configured to exchange heat between oxidant gas flowing through the second oxidant gas channel (33a) and the fuel off-gas or the oxidant off-gas flowing through the off-gas channel (33b, 133b, 134b, 232b),
the one or more heat exchangers are the first heat exchanger (31) and the third heat exchanger (33), and
the one or more other heat exchangers is the second heat exchanger (32).

5. The fuel cell system (10) according to Claim 4, further comprising:
a fuel gas supply line for supplying the fuel gas to the fuel electrode;
a condenser (62) that is disposed outside the case (39) and is configured to condense water vapor contained in the fuel off-gas;
a fuel off-gas supply line for supplying the fuel off-gas to the condenser (62);
a recirculation line for recirculating a portion of the fuel off-gas that has passed through the condenser (62) to the fuel gas supply line;
a fuel supply line for combustion that is configured to supply another portion of the fuel off-gas that has passed through the condenser (62) to the combustor (22); and
an oxidant off-gas supply line that is configured to supply oxidant off-gas discharged from the oxidant electrode to the combustor (22), wherein
the third heat exchanger (33) includes a fuel off-gas channel (33b, 133b, 134b, 232b) for flowing therethrough the fuel off-gas as the high-temperature gas, and is configured to exchange heat between oxidant gas flowing through the second oxidant gas channel (33a) and the fuel off-gas flowing through the fuel off-gas channel (33b, 133b, 134b, 232b), and
the fuel off-gas supply line is configured to supply fuel off-gas that has passed through the third heat exchanger (33) to the condenser (62).

6. The fuel cell system (10) according to any one of Claims 1 to 5, wherein
the one or more heat exchangers are arranged so as to cover, in combination with a heat insulation material (34, 35, 36, 37, 38a, 38b), at least a portion of the fuel cell (21) and the combustor (22).

7. The fuel cell system (10) according to any one of Claims 3 to 6, wherein
the one or more another heat exchangers are arranged so as to cover, in combination with a heat insulation material (34, 35, 36, 37, 38a, 38b), the one or more heat exchangers.
